(19) Europäisches Patentamt
European Patent Office
Office européen des brevets

(11) Veröffentlichungsnummer: **0 245 202**
**B1**

(12) # EUROPÄISCHE PATENTSCHRIFT

(45) Veröffentlichungstag der Patentschrift: **13.12.89**

(51) Int. Cl.$^4$: **D 06 P 3/66**, D 06 P 1/52, D 06 P 1/00

(21) Anmeldenummer: **87810261.5**

(22) Anmeldetag: **24.04.87**

(54) **Verfahren zum Bedrucken oder Färben von cellulosehaltigem Textilgut.**

(30) Priorität: **30.04.86 CH 1771/86**

(43) Veröffentlichungstag der Anmeldung: **11.11.87 Patentblatt 87/46**

(45) Bekanntmachung des Hinweises auf die Patenterteilung: **13.12.89 Patentblatt 89/50**

(84) Benannte Vertragsstaaten: **BE CH DE FR GB IT LI NL**

(56) Entgegenhaltungen:
**EP-A- 0 019 188**
**EP-A- 0 098 803**
**EP-A- 0 106 513**
**EP-A- 0 109 820**
**EP-A- 0 128 237**
**EP-A- 0 151 091**

(73) Patentinhaber: **CIBA-GEIGY AG**
**Klybeckstrasse 141**
**CH-4002 Basel (CH)**

(72) Erfinder: **Berendt, Hans-Ulrich**
**Langgartenweg 25**
**CH-4123 Allschwil (CH)**

**EP 0 245 202 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die vorliegende Erfindung betrifft ein Verfahren zum Bedrucken oder Färben von cellulosehaltigem Textilgut mit Reaktivfarbstoffen mit Hilfe von Schaum.

Es ist bekannt, dass man Cellulosefasermaterialien mit Hilfe von verschäumten Druckfarbenkompositionen färben kann. Dabei werden als Farbkomponenten Pigmente oder Pigmentpräparate eingesetzt, die stets mit Bindemitteln kombiniert werden. Diese Bindemittel enthaltenden Kompositionen haben den Nachteil, dass sie den Warengriff beeinträchtigen.

Beim Bedrucken mit Reaktivfarbstoffen hingegen werden in der Regel keine Binder eingesetzt. Es tritt daher keine Griffbeeinflussung auf. Um jedoch eine gute Standschärfe mit Reaktivfarbstoffen zu erreichen, sind grosse Mengen an Verdicker erforderlich. Der Nachteil der Verwendung der Verdicker ist, dass diese nach dem Drucken und Fixieren des Farbstoffes wieder ausgewaschen werden müssen. Diese Nachwäsche braucht einen erheblichen maschinellen Aufwand und erhöht den Verbrauch an Energie, Wasser und diversen Chemikalien.

In der EP-A-151091 oder US-A-4 604 099 wird eine Schaumdruckfarbe vorgeschlagen, die unter Ausschluss von Verdickern verwendet wird und eine gute Standschärfe ergibt. Diese Schaumdruckfarbe, die neben dem Farbstoff und dem Verschäumer Homopolymerisate, Mischpolymerisate oder Pfropfpolymerisate auf Basis von Acrylamid oder Methacrylamid enthält, besitzt im allgemeinen eine genügende Schaumstabilität. Bedingt durch gewisse Farbstoff-Formulierungen, hohe Scherkräfte und lange Verweilzeiten in der Applikationsanlage reicht jedoch die Schaumstabilität in manchen Fällen nicht aus.

Es wurde nun gefunden, dass man die Schaumstabilität wesentlich verbessern kann, wenn man cellulosehaltiges Textilgut mit dem im weiteren dargelegten Verfahren bedruckt oder färbt.

Gegenstand vorliegender Erfindung ist demnach ein Verfahren zum Bedrucken oder Färben von cellulosehaltigem Textilgut mit Reaktivfarbstoffen durch Bedrucken oder Färben des Textilgutes mit einer verschäumten, wässerigen Zubereitung und Fixierung des Farbstoffe durch Hitzeeinwirkung, wobei die Zubereitung Reaktivfarbstoffe, Schaumbildner, Fixieralkalien, Homopolymerisate oder Mischpolymerisate des Acrylamids oder Methacrylamids oder Pfropfpolymerisate, welche aus einem Anlagerungsprodukt von einem Alkylenoxid an einen mindestens dreiwertigen aliphatischen Alkohol mit 3 bis 10 Kohlenstoffatomen und Acrylamid oder Methacrylamid erhältlich sind, enthält, dadurch gekennzeichnet, dass die Zubereitung zusätzlich Pfropfpolymerisate enthält, welche als Pfropfgrundlage ein Copolymerisationsprodukt aus (A) einem Acryl- oder Methacrylsäurealkylester, wobei der Alkylrest mindestens 8 Kohlenstoffatome aufweist mit (B) einem Dicarbonsäurediester aus einer ethylenisch ungesättigten aliphatischen Dicarbonsäure und einem Polyethylenglykol, wobei eine endständige Hydroxylgruppe des Diols mit einem $C_1$-$C_4$-Alkylrest verethert ist, aufweisen und als Pfropfbestandteil Seitenketten von aufgepfropften hydrophyle Gruppen aufweisenden polymerisierbaren Monomeren, die vorzugsweise Sulfonsäure- oder Carboxylgruppen sind enthalten.

Die als Pfropfgrundlage eingesetzten Copolymerisate sind vorzugsweise aus 1 Mol des Dicarbonsäurediesters und 2 Mol Acryl- oder Methacrylsäurealkylester aufgebaut.

Der Dicarbonsäureester wird dadurch hergestellt, dass man die ethylenisch ungesättigte Dicarbonsäure oder deren funktionelle Derivate, insbesondere Anhydride mit einem monoveretherten Polyalkylenglykol verestert.

Ethylenisch ungesättigte Dicarbonsäuren weisen vorteilhafterweise 4 bis 10 Kohlenstoffatome auf und sind vorzugsweise Fumarsäure, Maleinsäure oder Itaconsäure, ferner die Mesacon-, Citracon- oder Methylenmalonsäure. Als Anhydrid dieser Säuren sei insbesondere Maleinsäureanhydrid genannt, das auch die bevorzugte Ausgangskomponente zur Herstellung des Dicarbonsäurediesters ist.

Die Veresterung der Dicarbonsäure wird zweckmässigerweise mit monoveretherten Diolen der Formel

$$HO{-}(CH_2CH_2O)_m{-}R \qquad (1)$$

durchgeführt, worin R $C_1$-$C_4$-Alkyl, wie z. B. Isobutyl, Isopropyl, Propyl, Ethyl und besonders Methyl darstellt und m 5 bis 100, vorteilhafterweise 5 bis 30 und vorzugsweise 8 bis 20 bedeutet. Beispiele derartiger Diole sind Polyethylenglykole mit einem durchschnittlichen Molekulargewicht von 350 bis 4 500, besonders 500 bis 1 000.

Die als Komponente (A) in Betracht kommenden Acryl- oder Methacrylsäureester leiten sich vorzugsweise von aliphatischen Monoalkoholen mit 8 bis 22 Kohlenstoffatomen ab. Als derartige aliphatische Monoalkohole können natürliche Alkohole, wie z. B. Laurylalkohol, Myristylalkohol, Cetylalkohol, Stearylalkohol, Arachidylalkohol oder Behenylalkohol, sowie synthetische Alkohole, z. B. Oxo-Alkohole, wie z. B. 2-Ethylbutanol, 2-Methylpentanol, Hexanol, Heptanol, 5-Methylheptan-3-ol, Octan-2-ol, Trimethylnonylalkohol, Decanol, Hexadecylalkohol oder Alfole® in Betracht kommen. Einige Vertreter der Alfole® sind Alfol (8-10), Alfol (9-11), Alfol (11-13), Alfol (10-14), Alfol (12-13) oder Alfol (16-18).

Die Monoalkohole können einzeln oder als Gemische verwendet werden.

Als hydrophile Gruppen aufweisende Monomere können Carbonsäuren, Dicarbonsäuren oder deren

Anhydride sowie auch Sulfonsäuren, die jeweils einen ethylenisch ungesättigten aliphatischen Rest und vorzugsweise höchstens 7 Kohlenstoffatome aufweisen, in Betracht kommen. Bei den Monocarbonsäuren handelt es sich z. B. um die Acrylsäure, Methacrylsäure, α-Halogenacrylsäure, 2-Hydroxyethylacrylsäure, α-Cyanoacrylsäure, Crotonsäure und Vinylessigsäure. Ethylenisch ungesättigte Dicarbonsäuren sind vorzugsweise die Fumarsäure, Maleinsäure oder Itaconsäure, ferner die Mesaconsäure, Citraconsäure, Glutaconsäure und Methylenmalonsäure. Als Anhydrid dieser Säuren sei insbesondere Maleinsäureanhydrid genannt. Als definitionsgemässe Sulfonsäuren kommen beispielsweise Vinylsulfonsäure oder 2-Acrylamido-2-methylpropansylfonsäure in Frage. Vorzugsweise handelt es sich um Monocarbonsäuren mit 3 bis 5 Kohlenstoffatomen, insbesondere um die Methacrylsäure und vor allem um die Acrylsäure.

Die zur Einführung der Seitenketten (oder Seitenzweige) benötigten Monomeren können einzeln oder in Mischung untereinander verwendet werden. Bevorzugtes aufgepfropftes Monomer ist Acrylsäure.

Die Pfropfpolymerisate enthalten vorteilhafterweise 20 bis 80 Gew.% der definierten Pfropfgrundlage und 80 bis 20 Gew.% aufgepfropftes ethylenisch ungesättigtes Monomer, insbesondere Acrylsäure als Seitenketten.

Bevorzugt weisen die Pfropfpolymerisate 25 bis 50 Gew.% der definierten Pfropfgrundlage und 50 bis 75 Gew.% aufgepfropfte Acrylsäure als Seitenketten auf.

Die Herstellung der Pfropfpolymerisate erfolgt nach an sich bekannten Methoden, zweckmässig in der Weise, dass man (1) ein Copolymerisat aus dem Dicarbonsäurediester und dem Acrylsäure- oder Methacrylsäurealkylester mit (2) einem ethylenisch ungesättigten polymerisierbaren Monomer, welches hydrophile Gruppen enthält, wie z. B. entsprechenden Carbonsäuren, deren Anhydriden oder Sulfonsäuren zusammenbringt und in Gegenwart von Katalysatoren, zweckmässig bei einer Temperatur von 40 bis 100 °C polymerisiert.

Man erhält somit vorwiegend Pfropfpolymerisate, in denen das Copolymerisationsprodukt die Stammkette bildet, die an einzelne Kohlenstoffatome das aufgepfropfte ethylenisch ungesättigte Monomer, insbesondere Acrylsäure in Form von Seitenketten enthält.

Als Katalysatoren werden zweckmässigerweise freie Radikale bildende organische oder vorzugsweise anorganische Initiatoren verwendet. Geeignete organische Initiatoren zur Durchführung der radikalischen Polymerisation sind z. B. symmetrische Peroxiddicarbonate, Butylperoctoate, Butylbenzoate, Peracetate oder Peroxiddicarbamate. Geeignete anorganische Initiatoren sind Wasserstoffsuperoxid, Perborate, Persulfate oder Peroxidsulfate.

Bevorzugter Initiator oder Aktivator ist Kaliumpersulfat.

Diese Katalysatoren können in Mengen von 0,05 bis 3 Gew.%, vorteilhafterweise 0,1 bis 2 Gew.% und vorzugsweise 0,2 bis 1 Gew.%, bezogen auf das Gesamtgewicht der Ausgangsprodukte, eingesetzt werden.

Die Pfropfpolymerisation wird vorteilhafterweise in inerter Atmosphäre, z. B. in einer Stickstoffatmosphäre durchgeführt.

Die Pfropfpolymerisate fallen als Lösungen oder als viskose Massen an. Durch Verdünnen bzw. je nach der Art der aufgepfropften Monomere durch Lösen und Verdünnen mit Wasser kann man für die Praxis verwendbare Produkte mit einem Trockengehalt von z. B. 5 bis 35 Gew.%, vorzugsweise 10 bis 25 Gew.% herstellen.

Die Einsatzmengen, in denen derartige Pfropfpolymerisate allein oder als Gemisch den zu verschäumenden Zubereitungen zugesetzt werden, können sich, je nach Druck- oder Färbeverfahren von 5 bis 50 g/l in Form von 10 bis 20 %igen wässerigen Lösungen bewegen. So haben sich Mengen von 20 bis 40 g in Form von 15 % wässerigen Lösungen, je Liter unverschäumter Zubereitung als vorteilhaft erwiesen.

Als erfindungsgemäss verwendete Polymerisate auf Basis von Acrylamid oder Methacrylamid kommen vorzugsweise die definitionsgemässen Acrylamid-Pfropfpolymerisate in Betracht.

Bevorzugt sind Pfropfpolymerisate, welche durch Pfropfpolymerisation von Methacrylamid oder insbesondere Acrylamid auf eine Anlagerungsprodukt von 4 bis 100 Mol, vorzugsweise 40 bis 80 Mol Propylenoxid an 3 bis 6 Kohlenstoffatome aufweisende drei- bis sechswertige Alkanole erhältlich sind. Diese Alkanole können geradkettig oder verzweigt sein. Als Beispiele seien Glycerin, Trimethylolethan, Trimethylolpropan, Erythrit, Pentaerythrit, Mannit oder Sorbit genannt.

Weitere geeignete Pfropfpolymerisate sind diejenigen, die durch Aufpfropfen von Methacrylamid oder Acrylamid auf Anlagerungsprodukte von Gemischen aus Ethylenoxid und Propylenoxid oder auch von Ethylenoxid allein an die genannten mehrwertigen Alhokole hergestellt werden.

Als besonders geeignet haben sich vor allem Pfropfpolymerisate aus Acrylamid und Anlagerungsprodukte von 40 bis 80 Mol Propylenoxid an 1 Mol Glycerin erwiesen.

Die erfindungsgemäss verwendeten Pfropfpolymerisate enthalten vorteilhafterweise 2,5 bis 50 Gew.% des definierten Anlagerungsproduktes als Stammkette und 50 bis 97,5 Gew.% aufgepfropftes Methacrylamid oder vorzugsweise Acrylamid als Seitenketten.

Bevorzugt weisen die Pfropfpolymerisate 2,5 bis 30 Gew.% des definitionsgemässen Alkylenoxidadduktes und 70 bis 97,5 Gew.% aufgepfropftes Methacrylamid oder insbesondere Acrylamid auf. Noch bevorzugter beträgt der Amidanteil 80 bis 97,5 Gew.%, bezogen auf das Pfropfpolymerisat.

Unter diesen Produkten werden solche, die als Stammkette 4 bis 20 Gew.% des Anlagerungsproduktes von 40 bis 80 Mol Propylenoxid an 1 Mol Glycerin und 80 bis 96 Gew.% Acrylamid enthalten,

besonders bevorzugt.

Die angegebenen Prozentsätze beziehen sich auf das gesamte Pfropfpolymerisat;

Die Herstellung der erfindungsgemäss verwendeten Acrylamid-Pfropfpolymerisate erfolgt nach an sich bekannten Methoden, zweckmässig in der Weise, dass man (1) ein Anlagerungsprodukt von einem Alkylenoxid an einen mindestens dreiwertigen aliphatischen Alkohol von 3 bis 10 Kohlenstoffatomen mit (2) Acrylamid oder Methacrylamid und in Gegenwart von Katalysatoren, zweckmässig bei einer Temperatur von 40 bis 100 °C polymerisiert. Man erhält somit vorwiegend Pfropfpolymerisate, in denen das Alkylenoxidaddukt die Stammkette bildet, die an einzelne Kohlenstoffatome das aufgepfropfte Acrylamid oder Methacrylamid in Form von Seitenketten enthält. Einzelheiten zur Herstellung der Acrylamid-Pfropfpolymerisate sind z. B. in der EP-A-151091 beschrieben.

Die Einsatzmengen, in denen die erforderlichen Acrylsäureamid-Polymerisate allein oder als Gemisch den zu verschäumenden Zubereitungen zugesetzt werden, können sich, je nach Druck- oder Färbeverfahren, zwischen 0,5 bis 20 g/l in Form wässeriger Lösungen bewegen. So haben sich Mengen von 0,5 bis 20 g, vorteilhafterweise 0,5 bis 10 g und vorzugsweise 1 bis 5 g in Form von 2 bis 10 %igen wässerigen Lösungen, je Liter unverschäumter Zubereitung als vorteilhaft erwiesen.

Zum Schaumauftrag können anstelle der genannten Acrylamid-Pfropfpolymerisate auch lineare oder verzweigte Polymere des Acrylsäureamids oder Methacrylsäureamids sowie Mischpolymerisate aus Acrylsäureamid oder Methacrylsäureamid und weiteren ethylenisch-ungesättigten Monomeren, wie z. B. Acrylsäure, Methacrylsäure, α-Halogenacrylsäure, 2-Hydroxyethylacrylsäure, α-Cyanoacrylsäure, Crotonsäure, Vinylessigsäure, Maleinsäure, Acrylnitril, Methacrylnitril, Vinylalkylether, (Methylvinylether, Isopropylvinylether), Vinylester (Vinylacetat), Styrol, Vinyltoluol, Vinylsulfonsäure, 2-Acrylamido-2-methylpropansulfonsäure oder Estern der genannten α,β-ungesättigten Carbonsäuren und vor allem Halbestern der Maleinsäure mit Anlagerungsprodukten von 2 bis 15 Mol Ethylenoxid an Monoalkoholen mit 8 bis 22 Kohlenstoffatomen, verwendet werden. Das Gewichtsverhältnis des Acrylsäureamids zu den anderen Monomeren ist vorzugsweise von 9 : 1 bis 1 : 1.

Als Schaumbildner eignen sich in der Regel anionische oder nichtionogene Verbindungen mit oberflächenaktiven Eigenschaften, nachfolgend als Tenside bezeichnet. Die Tenside verringern die Oberflächenspannung von Lösungen und erleichtern und stabilisieren damit die Schaumbildung. Sowohl die anionischen als auch die nichtionogenen Tenside können als Einzelverbindungen, als Mischungen untereinander oder als Kombinationen aus anionischen und nichtionogenen Tensiden vorhanden sein.

Beispielsweise kommen als anionische Tenside in Frage:

— sulfatierte aliphatische Alkohole, deren Alkylkette 8 bis 18 Kohlenstoffatome aufweist, z. B. sulfatierter Laurylalkohol;

— sulfatierte ungesättigte Fettsäuren oder Fettsäureniederalkylester, die im Fettrest 8 bis 20 Kohlenstoffatome aufweisen, z. B. Rizinolsäure und solche Fettsäuren enthaltende Oele, z. B. Rizinusöl;

— Alkylarylsulfonate mit einer oder zwei geradkettigen oder verzweigten Alkylketten mit insgesamt mindestens 6 Kohlenstoffatomen, z. B. Dodecylbenzolsulfonate, Dibutylnaphthalinsulfonate oder 3,7-Diisobutyl-naphthalinsulfonate;

— sulfonierte 1-Benzyl-2-alkylbenzimidazole mit 8 bis 22 Kohlenstoffatomen im Alkylrest;

— Sulfonate von Polycarbonsäureestern, z. B. Dioctylsulfosuccinate oder Sulfosuccinamide;

— die als Seifen bezeichneten Alkalimetall-, Ammonium- oder Aminsalze von Fettsäuren mit 10 bis 20 Kohlenstoffatomen, z. B. Kolophoniumsalze;

— Ester von Polyalkoholen, insbesondere Mono- oder Diglyceride von Fettsäuren mit 12 bis 18 Kohlenstoffatomen, z. B. Monoglyceride der Laurin-, Stearin- oder Oelsäure, und

— die mit einer organischen Dicarbonsäure, wie z. B. Maleinsäure, Malonsäure oder Sulfobernsteinsäure, vorzugsweise jedoch mit einer anorganischen mehrbasischen Säure, wie z. B. o-Phosphorsäure oder insbesondere Schwefelsäure in einen sauren Ester übergeführten Anlagerungsprodukte von 1 bis 60, vorzugsweise 2 bis 30 Mol, Ethylenoxid und/oder Propylenoxid an Fettamine, Fettamide, Fettsäuren oder Fettalkohole je mit 8 bis 22 Kohlenstoffatomen, an Alkylphenole mit 4 bis 16 Kohlenstoffatomen in der Alkylkette, o-Phenylphenol, Benzylphenol oder an drei- bis sechswertige Alkanole mit 3 bis 6 Kohlenstoffatomen.

Der Saürerest dieser anionischen Tenside liegt in der Regel in Salzform, d. h. als Alkalimetall-, Ammonium- oder Aminsalz vor. Beispiele für solche Salze sind Lithium-, Natrium-, Kalium-, Ammonium-, Trimethylamin-, Ethanolamin-, Diethanolamin- oder Triethanolaminsalze.

Gut geeignete anionische Tenside als Schaumbildner sind

(1) saure Ester oder deren Salze eines Polyadduktes von 2 bis 15 Mol Ethylenoxid an 1 Mol Fettalkohol mit 8 bis 22 Kohlenstoffatomen oder an 1 Mol Alkylphenol mit 4 bis 12 Kohlenstoffatomen im Alkylrest;

(2) Alkylsulfate, deren Alkylkette 8 bis 20 Kohlenstoffatome enthält z. B. Laurylsulfat;

(3) Alkylphenylsulfonate mit 8 bis 18 Kohlenstoffatomen im Alkylrest; oder

(4) Dialkylnaphthalinsulfonate mit 3 bis 5 Kohlenstoffatomen pro Alkylrest.

Die Komponenten (1) bis (4) können allein oder als Mischungen untereinander als Schaumbildner verwendet werden.

Das nichtionogene Tensid ist vorteilhafterweise ein nichtionogenes Alkylenoxydanlagerungsprodukt von 1 bis 100 Mol Alkylenoxyd, z. B. Ethylenoxyd und/oder Propylenoxyd, an 1 Mol eines aliphatischen Monoalkohols mit mindestens 4 Kohlenstoffatomen, eines 3- bis 6-wertigen aliphatischen Alkohols, eines gegebenenfalls durch Alkyl oder Phenyl substituierten Phenols oder einer Fettsäure mit 8 bis 22 Kohlenstoffatomen.

Als nichtionogene Tenside seien beispielsweise genannt :

— Fettalkohole mit 8 bis 22 Kohlenstoffatomen, vor allem Cetylalkohol ;

— Anlagerungsprodukte von vorzugsweise 2 bis 80 Mol Alkylenoxyd, insbesondere Ethylenoxyd, wobei einzelne Ethylenoxydeinheiten durch substituierte Epoxyde, wie Styroloxyd und/oder Propylenoxyd, ersetzt sein können, an höhere ungesättigte oder gesättigte Monoalkohole, Fettsäuren, Fettamine oder Fettamide mit 8 bis 22 Kohlenstoffatomen oder an Phenylphenol oder Alkylphenole, deren Alkylreste mindestens 4 Kohlenstoffatome aufweisen ;

— Alkylenoxyd-, insbesondere Ethylenoxyd- und/oder Propylenoxyd-Kondensationsprodukte (Blockpolymerisate) ;

— Umsetzungsprodukte aus einer 8 bis 22 Kohlenstoffatome aufweisenden Fettsäure und einem primären oder sekundären, mindestens eine Hydroxyniederalkyl- oder Niederalkoxyniederalkylgruppe aufweisenden Amin oder Alkylenoxyd-Anlagerungsprodukte dieser hydroxyalkylgruppenhaltigen Umsetzungsprodukte, wobei die Umsetzung so erfolgt, dass das molekulare Mengenverhältnis zwischen Hydroxyalkylamin und Fettsäure 1 : 1 und grösser als 1 z. B. 1 : 1 bis 2 : 1 sein kann, und

— Anlagerungsprodukte von Propylenoxyd an einen drei- bis sechswertigen aliphatischen Alkohol von 3 bis 6 Kohlenstoffatomen, z. B. Glycerin oder Pentaerythrit, wobei die Polypropylenoxydaddukte ein durchschnittliches Molekulargewicht von 250 bis 1 800, vorzugsweise 400 bis 900, aufweisen.

Gut geeignete nichtionogene Tenside als Schaumbildner sind :

(5) Anlagerungsprodukte von 2 bis 15 Mol Ethylenoxyd an 1 Mol eines aliphatischen Monoalkohols oder Fettsäure mit jeweils 8 bis 22 Kohlenstoffatomen oder an 1 Mol Alkylphenol mit insgesamt 4 bis 12 Kohlenstoffatomen im Alkylteil, insbesondere das Anlagerungsprodukt von 2 Mol Ethylenoxid an 1 Mol Cetylalkohol ;

(6) Fettsäurealkanolamide mit 8 bis 22 Kohlenstoffatomen im Fettsäurerest und 2 bis 6 Kohlenstoffatomen im Alkanolteil.

Weitere gut geeignete nichtionogene Tenside sind Blockpolymerisate der Formel

(2) $$R_1-O-(CH_2CH_2-O)_{n_1}-(\underset{Z_1}{\underset{|}{CH}}-\underset{Z_2}{\underset{|}{CH}}-O)_y-(CH_2CH_2O)_{n_2}-H$$ oder der Formel

(3) $$R_1-O-(\underset{Z_1}{\underset{|}{CH}}-\underset{Z_2}{\underset{|}{CH}}-O)_{y_1}-(CH_2CH_2O)_x-(\underset{Z_1}{\underset{|}{CH}}-\underset{Z_2}{\underset{|}{CH}}-O)_{y_2}-H$$

worin $R_1$ Wasserstoff, Alkyl oder Alkenyl mit höchstens 22 Kohlenstoffatomen, vorzugsweise 8 bis 16 Kohlenstoffatomen, o-Phenylphenyl oder Alkylphenyl mit 4 bis 12 Kohlenstoffatomen im Alkylteil, von $Z_1$ und $Z_2$ eines Wasserstoff und das andere Methyl, y 1 bis 75, vorzugsweise 3 bis 50 und x 1 bis 30 und die Summe von $n_1 + n_2$ 3 bis 50, vorzugsweise 3 bis 30 und von $y_1 + y_2$ 2 bis 30, vorzugsweise 4 bis 20 beträgt und $n_2$ und $y_2$ auch 0 sein können.

Bevorzugte Blockpolymerisate der Formel (2) sind diejenigen, worin $R_1$ Alkyl oder Alkenyl von 4 bis 18, vorzugsweise 8 bis 16 Kohlenstoffatomen, y 1 bis 30, vorzugsweise 3 bis 15, $n_1$ 3 bis 30 und $n_2$ 0 bedeuten.

Besonders vorteilhafte Blockpolymerisate sind Fettalkoholpolyglykolmischether, insbesondere Anlagerungsprodukte von 3 bis 30 Mol Ethylenoxid und 3 bis 30 Mol Propylenoxid an aliphatische Monoalkohole von 8 bis 22 Kohlenstoffatomen, vorzugsweise Alkanole von 8 bis 16 Kohlenstoffatomen.

Diese Blockpolymerisate sind vorteilhafterweise aus 10 bis 50 Gewichtsprozent sich von Ethylenoxid und 50 bis 90 Gewichtsprozent sich von Propylenoxid ableitenden Einheiten aufgebaut und besitzen ein Molekulargewicht von 300 bis 7 000, insbesondere 350 bis 3 500.

Als nichtionogene Tenside können ferner Siloxan-Oxyalkylen-Copolymerisate verwendet werden. Es handelt sich bei diesen Polymeren um Umsetzungsprodukte aus halogensubstituierten Organopolysiloxanen und Alkalimetallsalzen von Polyoxyalkylen, z. B. Polyethylen- oder Polypropylenglykolen. Derartige Verbindungen sind z. B. in der EP-A-30 919 oder 49 832 beschrieben.

Bevorzugte Blockpolymerisate und Siloxan-Oxyalkylen-Copolymerisate, die als Schaumbildner oder Schaummoderator eingesetzt werden, haben zweckmässigerweise einen Trübungspunkt von 15 bis 70 °C, vorzugsweise 25 bis 50 °C. Der Trübungspunkt wird z. B. nach DIN 53 917 bestimmt.

Die erfindungsgemäss verwendeten Schaumbildner werden vorzugsweise in Form von Mischungen der obengenannten anionischen und/oder nichtionogenen Tenside eingesetzt.

Zusätzlich zu den genannten anionischen und/oder nichtionogenen Tensiden können die schaumbildenden Mischungen quaternäre Ammoniumsalze enthalten. Letztere können z. B. durch Umsetzung aliphatischer Fettamine, deren Alkyl- oder Alkenylreste 8 bis 24 Kohlenstoffatome aufweisen, wie z. B. Dodecylamin, Hexadecylamin, Heptadecylamin, Octadecylamin, Talgfettamin, Behenylamin oder Oleylamin oder Di- und Triamine, wie z. B. Dodecylpropylendimain, Octadecylethylendiamin und Octadecyldiethylentriamin mit 1 bis 35 Aequivalenten eines Alkylenoxides, z. B. Propylenoxid, vor allem aber Ethylenoxid oder einem Gemisch aus Propylenoxid und Ethylenoxid und fakultativ zusätzlich mit 1 bis 2 Aequivalenten Styroloxid und durch anschliessende Umsetzung mit üblichen Quaternisierungsmitteln, wie z. B. Methyl-, Ethyl- oder Benzylhalogenid, Diethylsulfat und vor allem Dimethylsulfat, Halogenhydrine, Halogencarbonsäureamide, wie z. B. Chloracetamid, hergestellt werden.

Es können auch Gemische von diesen kationischen Hilfsstoffen zum Einsatz kommen.

Als besonders geeignete kationische Hilfsstoffe haben sich mit Dimethylsulfat, Diethylsulfat oder $C_1$-$C_2$-Alkylhalogeniden, z. B. Methylchlorid oder -jodid quaternisierte Produkte von Anlagerungsprodukten von 2 bis 35 Mol Ethylenoxid und gegebenenfalls zusätzlich 1 Mol Styroloxid an Alkylamine oder Alkenylamine mit 12 bis 24 Kohlenstoffatomen oder deren Gemisch erwiesen.

Bevorzugte Gemische von Schaumbildnern sind z. B. Kombinationen aus den Komponenten (1), (2), (3), (4), (5) und (6) und vor allem solche aus

(A) Alkylsulfonaten mit 8 bis 20 Kohlenstoffatomen und Fettalkoholen mit 12 bis 22 Kohlenstoffatomen oder Anlagerungsprodukten von 1 bis 4 Mol Ethylenoxid an diese Fettalkohole,

(B) Anlagerungsprodukten von 2 bis 12 Mol Ethylenoxid an 1 Mol Alkylphenol mit 4 bis 12 Kohlenstoffatomen im Alkylteil, Natriumsalzen von Schwefelsäureestern von Fettalkohol-Ethylenoxidaddukten mit 10 bis 22 Kohlenstoffatomen im Alkoholteil und 2 bis 4 Ethylenoxideinheiten, und Fettsäurediethanolamiden mit 8 bis 18 Kohlenstoffatomen im Fettsäurerest,

(C) Anlagerungsprodukten von 1 bis 15 Mol Ethylenoxid an 1 Mol Fettalkohol mit 12 bis 22 Kohlenstoffatomen und Fettsäurediethanolamiden mit 8 bis 18 Kohlenstoffatomen im Fettsäurerest,

(D) Natriumsalzen von Schwefelsäureestern von Fettalkoholethylenoxidaddukten mit 10 bis 22 Kohlenstoffatomen im Alkoholteil und 2 bis 4 Ethylenoxideinheiten, Fettsäurediethanolamiden mit 8 bis 18 Kohlenstoffatomen im Fettsäurerest und gegebenenfalls Anlagerungsprodukten von 1 bis 4 Mol Ethylenoxid an $C_{12}$-$C_{22}$-Fettalkohole,

(E) Natiumsalzen von Schwefelsäureestern von Fettalkoholethylenoxidaddukten mit 10 bis 22 Kohlenstoffatomen im Alkoholteil und 2 bis 4 Ethylenoxideinheiten, Fettsäurediethanolamiden mit 8 bis 18 Kohlenstoffatomen im Fettsäurerest, Alkylbenzolsulfonaten mit 8 bis 12 Kohlenstoffatomen im Alkylteil und gegebenenfalls zusätzlich dem Dinatriumsalz der 1-Benzyl-2-$C_{17}$-$C_{18}$-Alkylbenzimidazoldisulfonsäure,

(F) einem Schwefelsäureester oder dessen Salze eines Anlagerungsproduktes von 2 bis 15 Mol Ethylenoxid an 1 Mol eines aliphatischen Monoalkohols mit 8 bis 18 Kohlenstoffatomen oder insbesondere an 1 Mol eines Alkylphenols mit 4 bis 12 Kohlenstoffatomen im Alkylrest, und einem Anlagerungsprodukt von 3 bis 10 Mol Ethylenoxid und 3 bis 10 Mol Propylenoxid an 1 Mol eines aliphatischen Monoalkohols mit 8 bis 16 Kohlenstoffatomen, oder

(G) einem Schwefelsäureester oder dessen Salze (insbesondere Diethanolaminsalze), eines Anlagerungsproduktes von 2 bis 15 Mol Ethylenoxid an 1 Mol eines aliphatischen Monoalkohols mit 8 bis 18 Kohlenstoffatomen, einem Fettsäurediethanolamid mit 8 bis 18 Kohlenstoffatomen im Fettsäurerest, einem Dialkylnaphthalinsulfonat mit 3 bis 5 Kohlenstoffatomen pro Alkylrest und gegebenenfalls einem Anlagerungsprodukt von 2 bis 80 Mol Ethylenoxid an 1 Mol Fettalkohol mit 12 bis 22 Kohlenstoffatomen und/oder einem mit Dimethylsulfat quaternisierten Anlagerungsprodukt von 1 Mol Styroloxid und 10 bis 30 Mol Ethylenoxid an 1 Mol Fettamin mit 12 bis 22 Kohlenstoffatomen.

Die schaumbildenden Mischungen können durch einfaches Verrühren der Komponenten mit Wasser hergestellt werden. Gewünschtenfalls können die Schaumbildner in Form einer oder mehrerer Mischungen den Behandlungsflotten zugesetzt werden. Dabei können die einzelnen Mischungen auch als Schaummoderator, Schaumstabilisator oder Netzmittel dienen.

Die Einsatzmengen, in denen die Schaumbildner, vorzugsweise in Form von Mischungen, den Zubereitungen zugesetzt werden, bewegen sich je nach Druck- oder Färbeverfahren zwischen 5 und 200 g, vorzugsweise zwischen 10 und 100 g, pro Liter zu verschäumender Behandlungszubereitung.

Bei den im erfindungsgemässen Verfahren eingesetzten Farbstoffen handelt es sich um die üblicherweise zum Färben oder Bedrucken von Cellulose-Textilmaterialien verwendeten Reaktivfarbstoffe.

Unter Reaktivfarbstoffen werden die üblichen Farbstoffe verstanden, welche mit der Cellulose eine chemische Bindung eingehen, z. B. die in Colour Index, in Band 3 (3. Auflage, 1971) auf den Seiten 3391-3560 und in Band 6 (revidierte 3. Auflage, 1975) auf den Seiten 6268-6345 aufgeführten « Reactive Dyes ».

Die Menge der Farbstoffe richtet sich in der Regel nach der gewünschten Farbstärke und beträgt zweckmässig 1 bis 400 g pro Liter Zubereitung, vorteilhafterweise 5 bis 300 und vorzugsweise 10 bis 200 g/l Zubereitung (Druckfarbe oder Färbeflotte).

Zur Fixierung der Reaktivfarbstoffe enthalten die Zubereitungen in der Regel Alkalien. Als alkalisch reagierende Verbindungen werden beispielsweise Natriumcarbonat, Natriumhydroxid, Dinatriumphosphat, Trinatriumphosphat, Borax, wässeriges Ammoniak oder Alkalispender, wie z. B. Natriumtrichloracetat oder Natriumformiat eingesetzt. Als Alkali kann auch eine Mischung aus Wasserglas und einer 25 %igen wässerigen Natriumcarbonatlösung verwendet werden.

Der pH-Wert der Alkali enthaltenden Zubereitungen beträgt in der Regel 7,5 bis 13,2, vorzugsweise 8,5 bis 11,5.

Das erfindungsgemässe Verfahren eignet sich insbesondere für das Bedrucken von Textilien, die aus Cellulose bestehen oder diese enthalten.

Als Cellulosematerial kommt solches aus regenerierter oder insbesondere natürlicher Cellulose in Betracht, wie z. B. Zellwolle, Viskoseseide, Celluloseacetat, Hanf, Leinen, Jute oder vorzugsweise Baumwolle, sowie Fasermischungen z. B. solche aus Polyamid/Baumwolle oder insbesondere aus Polyester/Baumwolle, wobei der Polyesteranteil mit Dispersionsfarbstoffen gleichzeitig bedruckt oder gefärbt werden kann.

Das Textilgut ist in jeglicher Form anwendbar, wie z. B. Garne, Garnstränge, Gewebe, Gewirke, Filze, vorzugsweise in Form von textilen Flächengebilden wie Gewebe oder Maschenware, die ganz oder teilweise aus nativer, regenerierter oder modifizierter Cellulose bestehen.

Die zu verschäumenden Druckfarben oder Färbeflotten werden zweckmässigerweise durch Lösen des Farbstoffes und durch Zusatz der Acrylsäure- und Acrylamidpolymerisate, der Schaumbildner und von Alkali vorbereitet. Je nach dem verwendeten Farbstoff können die Druckfarben oder Färbeflotten weitere übliche Zusätze, wie z. B. Elektrolyte, Glycerin, Harnstoff, Oxydationsmittel z. B. Nitrobenzolsulfonat oder Natriumchlorat, Sequestrierungsmittel oder je nach Druckfarbe oder Färbeflotte auch Netzmittel enthalten. Der Zusatz von Verdickungsmitteln ist nicht notwendig.

Die Erzeugung der Schäume kann auf den handelsüblichen Verschäumungsvorrichtungen erfolgen, wobei die Schäume auch kontinuierlich hergestellt werden können.

Erfindungsgemäss haben sich Schäume, welche ein Litergewicht von 65 bis 350 g, vorzugsweise 150 bis 250 g haben, als geeignet erwiesen.

Die erfindungsgemäss eingesetzten Schäume zeichnen sich dadurch aus, dass sie dick, dicht und stabil sind, d. h. über längere Zeit haltbar und verwendbar sind. Vorzugsweise haben die erfindungsgemäss verwendeten Schäume eine Tropfenaustrittzeit (TAZ) von 30 Minuten bis 100 Stunden, vorzugsweise 1 bis 50 Stunden. Die Blasendurchmesser in den Schäumen betragen etwa 1 bis 100 µm.

Die Schäume können nach verschiedensten Anwendungstechniken gleichmässig auf die Fasermaterialien aufgebracht werden. Als Beispiele einiger Möglichkeiten seien genannt: Hineinsaugen, Rollrakeln (ein-oder beidseitig), Hineinblasen, Hineinpressen oder Drucken. Die Aufbringung der Schaumfarbe kann mit den im Textildruck üblichen Maschinen, z. B. Film- oder Rotationsdruckmaschinen erfolgen. Vorteilhafterweise wird der Schaum mittels einer Siebdruckmaschine, vorzugsweise in einem geschlossenen System, appliziert. Derartige Systeme sind beispielsweise in den DE-A-3 034 802 und 3 034 803 beschrieben.

Die Applikation der Schäume erfolgt zweckmässig bei einer Temperatur von 10 bis 90 °C, in der Regel bei Raumtemperatur, d. h. etwa bei 15 bis 30 °C. Bezogen auf das behandelte Gewebe beträgt der Schaumauftrag in der Regl 10 bis 120, insbesondere 15 bis 50 Gewichtsprozent.

Der Schaum kann aus einem Schaumbehälter, vorzugsweise mit verstellbarer Rakel, über eine Auftragswalze auf die Vorderseite des Gewebes gebracht werden. Bei Kontakt mit dem Gewebe wird der Schaum sofort entwässert. Gewünschtenfalls kann der Schaumauftrag auf der Rückseite des Gewebes wiederholt werden. In diesem Falle ist eine Zwischentrocknung zwischen dem Auftrag auf der Vorderseite und dem auf der Rückseite nicht erforderlich. Es ist auch möglich, auf Vorder- und Rückseite des Textiles unterschiedliche Druckschäume aufzubringen.

Vorzugsweise erfolgt der erfindungsgemässe Schaumauftrag dadurch, dass man zuerst die Behandlungszubereitung in einer geeigneten Vorrichtung im geschlossenen System, z. B. unter Druck verschäumt und den erzeugten Schaum mittels Rohrleitungen zur Auftragsvorrichtung transportiert. Dann wird der Schaum, vorzugsweise durch ein Sieb oder einen siebartigen Zwischenträger, auf das textile Flächengebilde aufgetragen, worauf durch ein mechanisches Eindrücken, Einpressen oder Einralkeln der Schaum in die Ware eingesaugt wird.

Als Sieb oder siebartiger Zwischenträger kann ein perforiertes Blech, ein Gitterwerk, Netzwerk, Drahtgewebe, Siebtrommel oder eine Siebschablone verwendet werden.

Durch die genannten Verfahrensweisen wird die Schaumstruktur unter Zerplatzen der Schaumbläschen zerstört, worauf sich der Schaum entwässert und das Textilmaterial gleichmässig benetzt wird.

Nach dem Schaumauftrag und der Entwässerung des Schaumes wird das bedruckte oder gefärbte Textilgut vorzugsweise getrocknet und dann einem Hitzebehandlungsprozess unterworfen, um die Färbungen zu verwollständigen (bzw. den Farbstoff zu fixieren).

Die Hitzebehandlung kann durch ein Warmverweilverfahren, einen Thermosolierprozess oder vorzugsweise durch ein Dämpfverfahren durchgeführt werden.

Beim Dämpfverfahren werden die mit dem Färbeschaum bedruckten Textilmaterialien einer Behandlung in einem Dämpfer mit gegebenenfalls überhitzten Dampf, zweckmässigerweise bei einer Temperatur von 98 bis 210 °C, vorteilhafterweise 100 bis 180 °C und vorzugsweise 100 bis 120 °C unterzogen.

Beim Warmverweilverfahren lässt man die Ware im feuchten Zustand z. B. 5 bis 120 Minuten lang, vorteilhafterweise bei Temperaturen von 85 bis 120 °C verweilen. Hierbei kann die bedruckte Ware durch eine Infrarot-Behandlung auf 85 bis 102 °C vorgeheizt werden. Bevorzugt beträgt die Verweiltemperatur 95 bis 100 °C.

Die Fertigstellung der Drucke oder Färbungen durch den sogenannten Thermosolierprozess kann nach einer oder ohne Zwischentrocknung z. B. bei einer Temperatur von 100 bis 210 °C erfolgen. Vorzugsweise erfolgt die Thermosolierung bei einer Temperatur von 120 bis 210 °C, vorzugsweise 140 bis 180 °C und nach einer Zwischentrocknung bei 80 bis 120 °C der bedruckten Ware. Je nach der Temperatur kann die Thermosolierung 20 Sekunden bis 5 Minuten, vorzugsweise 30 Sekunden bis 4 Minuten dauern.

Im Anschluss an den Färbeprozess kann man das gefärbte cellulosehaltige Textilgut in üblicher Weise auswaschen, um nichtfixierten Farbstoff zu entfernen. Man behandelt dazu das Substrat beispielsweise bei 40 °C bis Kochtemperatur in einer Lösung, die Seife oder synthetisches Waschmittel enthält. Anschliessend kann zur Verbesserung der Nassechtheiten eine Behandlung mit einem Fixiermittel erfolgen.

Man erhält mit dem erfindungsgemässen Verfahren egale und farbkräftige Farbdrucke, die sich durch verbesserte Standschärfe, einen guten Warengriff und ausgezeichnetes Warenbild auszeichnen. Desweiteren werden die Gebrauchsechtheiten der gefärbten Ware, wie z. B. Lichtechtheit, Reibechtheit und Nassechtheiten durch den Einsatz der definierten Acrylsäure- und Acrylamid-Polymerisate nicht negativ beeinflusst.

Insbesondere können mittels des erfindungsgemässen Schaumauftrages Farbdrucke mit Reaktivfarbstoffen auf cellulosehaltigen Textilien unter Ausschluss der üblichen Verdickungsmittel, wie z. B. Alginate, Cellulosederivate, Stärkeether oder Kernmehlether wie Johannisbrotkernmehl, die in der Regel in grossen Mengen verwendet werden, erzielt werden. Erfindungsgemäss werden Farbdrucke mit ausgezeichneter Standschärfe schon bei Zusatz geringer Mengen der definitionsgemässen Acrylsäure- und Acrylsäureamid-Polymerisate erhalten.

In den folgenden Vorschriften, Herstellungs-Beispielen und Anwendungs-Beispielen beziehen sich Teile und Prozentansätze, wenn nichts anderes angegeben ist, jeweils auf das Gewicht.

Die Mengen beziehen sich bei den Farbstoffen auf handelsübliche, d. h. coupierte Ware und bei den Hilfsmitteln auf Reinsubstanz. Die fünfstelligen Colour-Index Nummern (C.I.) beziehen sich auf die 3. Auflage des Colour-Index.

Hestellungsvorschriften

Vorschrift 1 : Eine Lösung von 22,5 g Acrylamid, 2,5 g eines Anlagerungsproduktes von 52 Mol Propylenoxid an 1 Mol Glycerin und 0,04 g Kaliumperoxidisulfat in 200 g Wasser wird unter Rühren und Ueberleiten von Stickstoff auf 50 °C erwärmt und 3 Stunden bei dieser Temperatur gehalten. Hierauf lässt man eine Lösung von 0,03 g Kaliumperoxidisulfat in 40 g Wasser während 60 Minuten zutropfen und verdünnt die sehr viskose Lösung unter Zugabe von 300 ml Wasser während 30 Minuten. Alsdann wird die Reaktionsmischung 5 Stunden bei 50 °C gehalten, anschliessend mit 0,6 g Hydrochinon-monomethylether und 0,12 g Natriumazid versetzt und unter Rühren auf Raumtemperatur abgekühlt. Man erhält 565 g eines Gels mit einem Polymergehalt von 4,4 %. Dieses Gel hat, gemessen bei 25 °C, eine Viskosität von 112 957 mPas.

Vorschrift 2 : Eine Lösung von 71,25 g Acrylamid, 3,75 g eines Adduktes aus Propylenoxid und Glycerin mit einem durchschnittlichen Molekulargewicht von 4 200 und 0,09 g Kaliumperoxidisulfat in 600 g Wasser wird vorgelegt und unter Rühren und Ueberleiten von Stickstoff auf 50 °C erwärmt und 3 Stunden auf 50 °C gehalten. Die Viskosität der Lösung nimmt allmählich zu. Man lässt eine Lösung von 0,06 g Kaliumperoxidisulfat in 120 g Wasser während 60 Minuten zutropfen. Etwa 10 Minuten nach Beginn des Zutropfens wird die Viskosität der Lösung so gross, dass man während der folgenden 20 Minuten 600 g Wasser zufliessen lassen muss. Nach beendetem Zutropfen der Kaliumperoxidisulfatlösung hält man die zunehmend viskoser werdende Lösung weitere 5 Stunden auf 50 °C, wobei mit zusätzlichen 400 g Wasser in Portionen verdünnt wird. Man fügt 1,7 g Hydrochinon-monomethylether zu, kühlt unter Rühren auf Raumtemperatur, ab und erhält 1 794 g eines frei fliessenden Gels mit einem Polymergehalt von 4,3 %. Dieses Gel hat, gemessen bei 25 °C, eine Viskosität von 64 202 mPas.

Vorschrift 3 : Eine Lösung von 71,25 g Acrylamid, 3,75 g eines Adduktes aus Propylenoxid und Pentaerythrit mit einem durchschnittlichen Molekulargewicht von 3 350 und 0,09 g Kaliumperoxidisulfat in 600 g Wasser wird unter Rühren und Ueberleiten von Stickstoff auf 50 °C erwärmt und 3 Stunden auf 50 °C gehalten. Die Viskosität der Lösung nimmt allmählich zu. Man lässt nun eine Lösung von 0,06 g Kaliumperoxidisulfat in 120 g Wasser während 60 Minuten zutropfen. Etwa 30 Minuten nach beendetem Zutropfen nimmt die Viskosität der Lösung zu. Man lässt deshalb wäHrend der folgenden 20 Minuten 600 g Wasser zufliessen. Man hält dann die viskoser werdende Lösung weitere 4 Stunden auf 50 °C, verdünnt danach mit zusätzlichen 400 g Wasser, fügt 3,4 g Triethanolamin zu, kühlt unter Rühren auf Raumtemperatur ab und erhält 1 793 g eines noch fliessenden Gels mit einem Feststoffgehalt von 4,0 %.

Dieses Gel hat, gemessen bei 25 °C, eine Viskosität von 75 300 mPas.

Vorschrift 4 : Eine Lösung von 17,8 g Acrylamid, 0,94 g eines Anlagerungsproduktes von 70 Mol Propylenoxid und 6 Mol Ethylenoxid an 1 Mol Glycerin und 0,025 g Kaliumperoxidisulfat in 250 g Wasser wird unter Rühren und Ueberleiten von Stickstoff auf 50 °C erwärmt und 3 Stunden bei dieser Temperatur gehalten. Man erhöht die Temperatur der Lösung im Verlaufe von 20 Minuten auf 60-63 °C bis die Viskosität deutlich zunimmt und kühlt danach auf 55 °C ab. Man hält die zunehmend viskoser werdende Lösung 5 Stunden auf 55 °C. Alsdann versetzt man die viskose Lösung mit einer Lösung von 0,45 g Chloracetamid und 0,45 g Hydrochinonmonomethylether in 177 g Wasser und erhält 446 g eines Gels mit einem Pfropfpolymerisatgehalt von 4,2 %. Dieses Gel hat, gemessen bei 25 °C, eine Viskosität von 96 750 mPas.

Vorschrift 5 : Ersetzt man in der Vorschrift 4 das angegebene Anlagerungsprodukt durch ein weiteres Anlagerungsprodukt von 53 Mol Propylenoxid an 1 Mol Trimethylolpropan, so erhält man 446 g eines Gels mit einem Pfropfpolymerisatgehalt von 4,2 %. Dieses Gel hat, gemessen bei 25 °C, eine Viskosität von 19 500 mPas.

Vorschrift 6 : Eine Lösung von 17,24 g Acrylamid, 4,31 g eines Anlagerungsproduktes von 70 Mol Propylenoxid an 1 Mol Glycerin und 0,035 g Kaliumperoxidisulfat in 200 g Wasser wird unter Rühren und Ueberleiten von Stickstoff auf 50 °C erwärmt und 4 Stunden bei dieser Temperatur gehalten. Anschliessend wird die zunehmend viskoser werdende Lösung 5 Stunden auf 55 °C erwärmt. Man versetzt das Gel mit einer Lösung von 0,4 g Chloracetamid und 0,4 g Hydrochinonmonomethyläther in 291 g Wasser und erhämlt 513 g eines Gels mit einem Polymergehalt von 4,2 %. Dieses Gel hat, gemessen bei 25 °C, eine Viskosität von 25 750 mPas.

Vorschrift 7 : Eine Mischung von 15,1 g Acrylamid, 6,5 g eines Anlagerungsproduktes von 70 Mol Propylenoxid an 1 Mol Glycerin und 0,025 g Kaliumperoxidisulfat in 200 g Wasser wird unter Rühren und Ueberleiten von Stickstoff auf 50 °C erwärmt und 3 Stunden bei dieser Temperatur gehalten. Anschliessend wird die zunehmend viskoser werdende Lösung 5 Stunden auf 55 °C erwärmt. Man versetzt das Gel mit einer Lösung von 0,4 g Chloracetamid und 0,4 g Hydrochinonmonomethyläther in 291 g Wasser und erhält 512 g eines Gels mit einem Polymergehalt von 4,2 %. Dieses Gel hat, gemessen bei 25 °C, eine Viskosität von 16 300 mPas.

Vorschrift 8 : Eine Mischung von 13 g Acrylamid, 8,7 g eines Anlagerungsproduktes von 70 Mol Propylenoxid an 1 Mol Glycerin und 0,015 g Kaliumperoxidisulfat in 150 g Wasser wird unter Rühren und Ueberleiten von Stickstoff auf 50 °C erwärmt und 4 Stunden bei dieser Temperatur gehalten. Anschliessend wird die zunehmend viskoser werdende Lösung 2 Stunden auf 65 °C und weitere 3 Stunden auf 60 °C erwärmt. Man versetzt das Gel mit einer Lösung von 0,4 g Chloracetamid und 0,4 g Hydrochinonmonomethyläther in 347 g Wasser und erhält 519 g eines Gels mit einem Polymergehalt von 4,2 %. Dieses Gel hat, gemessen bei 25 °C, eine Viskosität von 15 582 mPas.

Hestellungsbeispiele

Beispiel 1

A. 98 g Maleinsäureanhydrid, 860 g Polyethylenglykolmonomethylether-430, 300 ml Benzol und 0,5 ml Schwefelsäure (93,6 %) werden auf Rückflusstemperatur im Verlaufe von 8 Stunden geheizt, wobei 9,5 ml Wasser azeotrop abdestilliert werden. Hierauf zieht man das Schleppmittel zunächst am Wasserstrahlvakuum, später am Hochvakuum bei einer Endheiztemperatur von 90 °C vollständig ab. Man erhält 949 g Polyethylenglykolmonomethylether-430-maleinat.

B. 117,5 g des gemäss A. hergestellten Maleinates, 84,7 g Stearylmethacrylat, 3,4 g Tetrabrommethan, 200 ml Toluol und 0,56 g Tert.butyl-per-2-ethylbenzoat werden auf 80 °C geheizt und 1 Stunde bei dieser Temperatur gehalten. Alsdann lässt man im Verlaufe von 3 Stunden eine Lösung von 1,68 g Tert.butyl-per-2-ethylhexanoat in 15 ml Toluol zutropfen, worauf nach beendeter Zugabe noch 2 Stunden bei 80 °C nachpolymerisiert wird. Man zieht anschliessend das Lösemittel zunächst am Wasserstrahlvakuum, später bei 90 °C am Hochvakuum ab und erhält 205 g einer flüssigen Reaktionsmasse, die bei Raumtemperatur zu einer wachsigen Masse erstarrt und das Poly-[Stearylmethacrylat-co-polyethylenglykolmonomethylmether-430-maleinat] darstellt.

F = 29-30 °C $M_w$ = 16 000 ± 3 000 (Lichtstreuung)
Grenzviskosität (η) = 0.052 ± 0.01 (dl/g)

C. 30 g des gemäss B. hergestellten Poly-[Stearylmethacrylat-co-polyethylenglykolmonomethylether-430-maleinat]-es und 150 ml Wasser werden auf 90 °C geheizt. Hierauf lässt man getrennt über zwei Tropftrichter eine Lösung von 90 g Acrylsäure in 110 ml Wasser und eine Lösung von 0,5 g

Kaliumpersulfat in 50 ml Wasser zutropfen. Der im Verlaufe der Pfropfpolymerisation auftretenden Verdickung wird durch Zugabe von 125 ml Wasser entgegengesteuert, sodass stets gute Durchmischung der Reaktionsmasse gewährleistet ist. Man hält 1 Stunde bei 80 °C und lässt im Verlaufe von 30 Minuten erneut eine Lösung von 0,25 g Kaliumpersulfat in 40 ml Wasser zutropfen. Nach 2 Stunden Nachpolymerisation bei 90 °C wird das Reaktionsprodukt auf Raumtemperatur abgekühlt. Hierauf setzt man 200 ml Wasser und 5 ml einer 30 %igen wässerigen Natriumhydroxydlösung zu und rührt homogen. Die gut fliessfähige Dispersion (800 g) hat einen Feststoffghalt von 15 %.

Beispiel 2

B. 235 g des gemäss Beispiel 1, A. hergestellten Maleinates, 84,7 g Stearylmethacrylat, 3,4 g Tetrabrommethan, 200 ml Benzol und 0,56 g Tert.butyl-per-2-ethyl-hexanoat werden nach Spülen mit Stickstoff auf 80 °C geheizt und 1 Stunde bei dieser Temperatur gehalten. Alsdann lässt man im Verlauf von 3 Stunden eine Lösung von 1,68 g Tert.butyl-per-2-ethylhexanoat in 15 ml Benzol zutropfen, worauf nach beendeter Zugabe noch 2 Stunden bei 80 °C nachpolymerisiert wird. Nach Abziehen des Lösungsmittels erhält man 325 g Poly-(stearylmethacrylat-copolyethylenglykolmonomethylether-430-maleinat). Grenzviskositat $\eta$ = 0.050 dl/g Molekulargewichtsmittel $M_w$ = 15 000 ± 2 000.

C. 60 g des gemäss B. hergestellten Polymaleinates werden zusammen mit 77,5 ml Wasser nach Spülen mit Stickstoff auf 90 °C geheizt. Hierauf lässt man getrennt über zwei Tropfrichter, in der Weise, dass beide Volumina am Ende aufgehen, eine Lösung von 45 g Acrylsäure in 40 ml Wasser und eine Lösung von 1,0 g Kaliumpersulfat in 25 ml Wasser zutropfen. Man hält 1 Stunde bei 90 °C und lässt dann eine Lösung von 0,5 g Kaliumpersulfat in 15 ml Wasser zutropfen, wonach 4 Stunden lang nachpolymerisiert wird. Man kühlt auf Raumtemperatur und lässt 3,35 g einer 30 %igen Natriumhydroxidlösung zutropfen. Man erhält 266 g einer gut fliessfähigen Dispersion mit einem Aktivsubstanzgehalt von 39,5 %. Verhältnis Polymaleinat zu Acrylsäure 1 : 0,75.

Beispiel 3

90 g des gemäss Beispiel 2, B. hergestellten Poly-(stearylmethacrylat-copolyethylenglykolmonomethylether-430-maleinates) und 60 ml Wasser werden nach Spülen mit Stickstoff auf 90 °C geheizt. Hierauf lässt man über zwei Tropfrichter, getrennt, in der Weise, dass beide Volumina gleichzeitig aufgehen, eine Lösung von 33,75 g Acrylsäure in 16,3 ml Wasser und eine Lösung von 1,5 g Kaliumpersulfat in 30 ml Wasser zutropfen. Man hält 1 Stunde bei 90 °C und lässt erneut eine Lösung von 0,75 g Kaliumpersulfat in 17,5 ml Wasser zutropfen. Danach lässt man noch 3 Stunden auspolymerisieren. Man kühlt auf Raumtemperatur ab und setzt 2,5 g einer 30 %igen Natriumhydroxidlösung zu. Man erhält 250 g einer gut fliessfähigen Dispersion mit einem Aktivsubstanzgehal von 49,7 %.
Verhältnis Polymaleinat zu Acrylsäure 1 : 0,375.

Beispiel 4

30 g des gemäss Beispiel 2, B. hergestellten Poly-(stearylmethacrylat-copolyethyethylenglykolmonomethylether-430-maleinates) und 150 ml Wasser werden nach Spülen mit Stickstoff auf 90 °C geheizt. Hierauf lässt man über zwei Tropfrichter, getrennt, in der Weise, dass beide Volumina gleichzeitig aufgehen, eine Lösung von 45 g Acrylsäure in 60 ml Wasser und eine Lösung von 0,5 g Kaliumpersulfat in 30 ml Wasser zutropfen. Im Verlaufe der Zudosierung werden portionenweise noch 90 ml Wasser hinzugefügt. Man hält 1 Stunde bei 90 °C und lässt erneut eine Lösung von 0,25 g Kaliumpersulfat in 40 ml Wasser zutropfen. Danach lässt man noch 2 Stunden auspolymerisieren. Man kühlt auf Raumtemperatur ab, verdünnt mit 52,5 ml Wasser und setzt 3,35 g einer 30 %igen Natriumhydroxidlösung zu. Man erhält 500,8 g einer gut fliessfähigen Dispersion mit einem Aktivsubstanzgehalt von 15 %.
Verhältnis Polymaleinat zu Acrylsäure 1 : 1,5.

Anwendungsbeispiele

Beispiel 1

Man stellt eine Druckfarbe her, die in 1 Liter Wasser folgende Zusätze enthält
80 g eines Farbstoffes der Formel

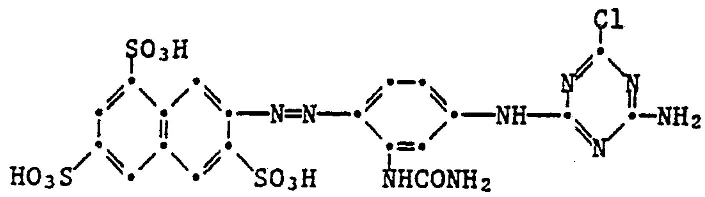

(11)

200 g einer wässerigen Mischung, die 30 g eines Anlagerungsproduktes von 2 Mol Ethylenoxid an 1 Mol Cetylalkohol und 0,1 g Natriumlaurylsulfat enthält,
20 g des gemäss Vorschrift 2 hergestellten Pfropfpolymerisates,
30 g des 15 %igen, gemäss Beispiel 1, C. hergestellten Polymerisationsproduktes,
10 g des Natriumsalzes von m-Nitrobenzolsulfonsäure,
100 g einer 25 %igen wässerigen Natriumcarbonatlösung und
100 g Harnstoff
enthält.

Hierauf wird die Druckfarbe in einem geschlossenen System über ein Schaumaggregat verschäumt. Der Schaum hat ein Litergewicht von 200 g und eine Tropfenaustrittzeit von über 30 Stunden.

Dieser Schaum wird durch Rohrleitungen über eine Siebschablone auf eine Baumwollgewebe mit einem Druck von 2,5 bar gepresst. Alsdann wird das bedruckte Gewebe getrocknet, 8 Minuten bei 102 °C gedämpft, anschliessend wie üblich geseift und getrocknet.

Man erhält einen farbstarken, egalen, und schaftstehenden goldgelben Druck mit einem ausgezeichneten Warengriff und guten Gebrauchsechtheiten.

Aehnliche gute Farbdrucke werden erzielt, wenn anstelle des gemäss Vorschrift 2 hergestellten Pfropfpolymerisates gleiche Menge der gemäss Vorschriften 1 und 3 bis 8 hergestellten Pfropfpolymerisate sowie von Polyacrylamid in Form einer 4 %igen wässerigen Lösung mit einer Viskosität von 28'000 cps, gemessen bei 25 °C, eingesetzt werden.

Beispiel 2

Man stellt eine Druckfarbe her, die in 1 Liter Wasser folgende Zusätze enthält :

80 g des Farbstoffes Reactive Orange 13, C.I. 18270
200 g einer wässerigen Mischung, die 30,0 g eines Anlagerungsproduktes von 2 Mol Ethylenoxid an 1 Mol Cetylalkohol und 0,1 g Natriumlaurylsulfat enthält,
20 g des gemäss Vorschrift 2 hergestellten Pfropfpolymerisates,
30 g des 15 %igen, gemäss Beispiel 1, C. hergestellten Polymerisationsproduktes,
10 g m-Nitrobenzolsulfonsäure-Natriumsalz,
100 g einer 25 %igen wässerigen Natriumcarbonatlösung und
100 g Harnstoff
enthält.

Hierauf wird die Druckfarbe in einem geschlossenen System über ein Schaumaggregat verschäumt. Der Schaum hat ein Litergewicht von 200 g. Tropfenaustrittzeit : 48 Stunden.

Dieser Schaum wird durch Rohrleitungen über eine Siebschablone auf ein Baumwollgewebe mit einem Druck von 2,5 bar gepresst. Alsdann wird das bedruckte Gewebe getrocknet, 8 Minuten bei 101 °C gedämpft, anschliessend wie üblich gespült und wieder getrocknet.

Man erhält einen egalen, orangen Druck mit guten Echtheiten.

Beispiel 3

Man stellt eine Druckfarbe her, die in 1 Liter Wasser folgende Zusätze enthält :
150 g eines Farbstoffes der Formel

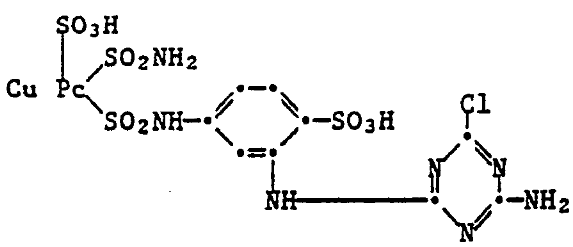

(12)

200 g einer wässerigen Mischung, die 30,0 g eines Anlagerungsproduktes von 2 Mol Ethylenoxid an 1 Mol Cetylalkohol und 0,1 g Natriumlaurylsulfat enthält,
20 g des gemäss Vorschrift 2 hergestellten Pfropfpolymerisates,
10 g des Natriumsalzes von m-Nitrobenzolsulfonsäure,
30 g des 15 %igen, gemäss Beispiel 1, C. hergestellten Polymerisationsproduktes,
100 g einer 25 %igen wässerigen Natriumcarbonatlösung und
100 g Harnstoff
enthält.

Hierauf wird die Druckfarbe in einem geschlossenen System über ein Schaumaggregat verschäumt. Der Schaum hat ein Litergewicht von 200 g. Tropfenaustrittzeit : 20 Stunden.

Dieser Schaum wird durch Rohrleitungen über eine Siebschablone auf ein Baumwollgewebe mit einem Druck von 2,5 bar gepresst. Alsdann wird das bedruckte Gewebe getrocknet, 8 Minuten bei 101 °C gedämpft, anschliessend wie üblich gespült und wieder getrocknet.

Man erhält einen egalen, brillanten türkisblauen Druck mit guten Echtheiten.

Beispiel 4

Man stellt eine Druckfarbe her, die in 1 Liter Wasser folgende Zusätze enthält :
90 g eines Farbstoffes der Formel

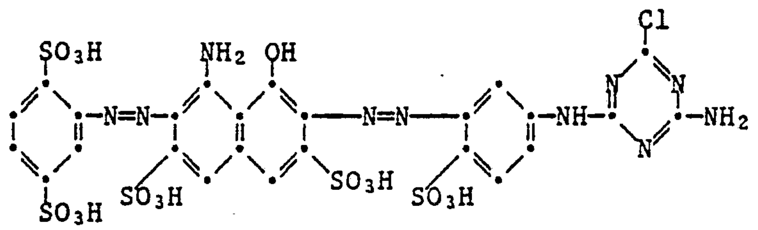

(13)

30 g des 15 %igen, gemäss Beispiel 1, C. hergestellten Polymerisationsproduktes,
200 g einer wässerigen Mischung, die 30 g eines Anlagerungsproduktes von 2 Mol Ethylenoxid an 1 Mol Cetylalkohol und 0,1 g Natriumlaurylsulfat enthält,
20 g des gemäss Vorschrift 2 hergestellten Pfropfpolymerisates,
10 g m-Nitrobenzolsulfonsäure-Natriumsalz,
100 g einer 25 %igen wässerigen Natriumcarbonatlösung und
100 g Harnstoff
enthält.

Hierauf wird die Druckfarbe in einem geschlossenen System über ein Schaumaggregat verschäumt. Der Schaum hat ein Litergewicht von 200 g. Tropfenaustrittzeit : 70 Stunden.

Dieser Schaum wird durch Rohrleitungen über eine Siebschablone auf ein Baumwollgewebe mit einem Druck von 2,5 bar gepresst. Alsdann wird das bedruckte Gewebe getrocknet, 8 Minuten bei 101 °C gedämpft, anschliessend wie üblich geseift und wieder getrocknet.

Man erhält einen farbstarken, egalen, und scharfstehenden marineblauen Druck mit einem ausgezeichneten Warengriff und guten Gebrauchsechtheiten.

Beispiel 5

Man stellt eine Druckfarbe her, die in 1 Liter Wasser folgende Zusätze enthält :
200 g eines Farbstoffes der Formel

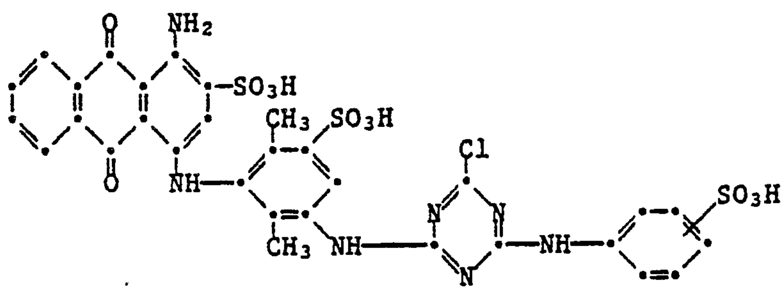

(14)

in 40 % flüssiger Form

150 g einer wässerigen Mischung, die 22,5 g eines Anlagerungsproduktes von 2 Mol Ethylenoxid an 1 Mol Cetylalkohol und 0,11 g Natriumlaurylsulfat enthält,
20 g des gemäss Vorschrift 2 hergestellten Pfropfpolymerisates,
3,7 g des gemäss Beispiel 2 hergestellten Acrylsäurepfropfpolymerisates,
10 g des Natriumsalzes von m-Nitrobenzolsulfonsäure,
100 g einer 25 %igen wässerigen Natriumcarbonatlösung und
100 g Harnstoff
enthält.

Hierauf wird die Druckfarbe in einem geschlossenen System über ein Schaumaggregat verschäumt. Der Schaum hat ein Litergewicht von 185 g und eine Tropfenaustrittzeit von über 48 Stunden.

Dieser Schaum wird durch Rohrleitungen über eine Siebschablone auf ein Baumwollgewebe mit einem Druck von 2,5 bar gepresst. Alsdann wird das bedruckte Gewebe getrocknet, 8 Minuten bei 102 °C gedämpft, anschliessend wie üblich geseift und getrocknet.

Man erhält einen farbstarken, egalen, und scharfstehenden blauen Druck mit einem ausgezeichneten Warengriff und guten Gebrauchsechtheiten.

Aehnliche gute Farbdrucke werden erzielt, wenn anstelle von 0,11 g Natriumlaurylsulfat 1,8 g Natrium-Dodecylbenzolsulfonat eingesetzt werden.

Beispiel 6

Man stellt eine Druckfarbe her, die in 1 Liter Wasser folgende Zusätze enthält:
150 g eines Farbstoffes der Formel

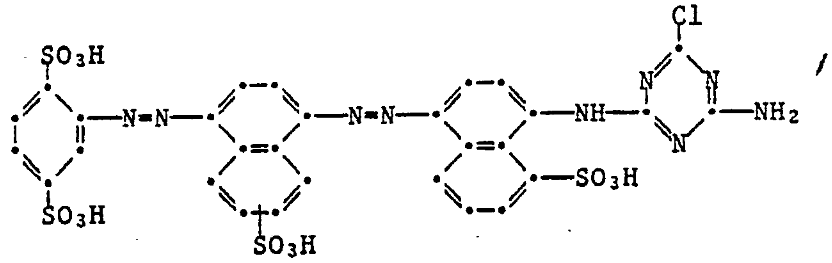

(15)

in 50 % flüssiger Form

150 g einer wässerigen Mischung, die 22,5 g eines Anlagerungsproduktes von 2 Mol Ethylenoxid an 1 Mol Cetylalkohol und 0,11 g Natriumlaurylsulfat enthält,
20 g des gemäss Vorschrift 2 hergestellten Pfropfpolymerisates,
20 g des gemäss Beispiel 3 hergestellten Acrylsäurepfropfpolymerisates
10 g des Natriumsalzes von m-Nitrobenzolsulfonsäure,
100 g einer 25 %igen wässerigen Natriumcarbonatlösung und
100 g Harnstoff
enthält.

Hierauf wird die Druckfarbe in einem geschlossenen System über ein Schaumaggregat verschäumt. Der Schaum hat ein Litergewicht von 167 g und eine Tropfenaustrittzeit von über 20 Stunden.

Dieser Schaum wird durch Rohrleitungen über eine Siebschablone auf ein Baumwollgewebe mit einem Druck von 2,5 bar gepresst. Alsdann wird das bedruckte Gewebe getrockenet, 8 Minuten bei 102 °C gedämpft, anschliessed wie üblich geseift und getrocknet.

Man erhält einen farbstarken, egalen und scharfstehenden braunen Druck mit einem ausgezeichneten Warengriff und guten Gebrauchsechtheiten.

**Patentansprüche**

1. Verfahren zum Bedrucken oder Färben von cellulosehaltigem Textilgut mit Reaktivfarbstoffen durch Bedrucken oder Färben des Textilgutes mit einer verschäumten, wässerigen Zubereitung und Fixierung der Farbstoffe durch Hitzeeinwirkung, wobei die Zubereitung Reaktivfarbstoffe, Schaumbildner, Fixieralkalien, Homopolymerisate oder Mischpolymerisate des Acrylamids oder Methacrylamids oder Pfropfpolymerisate, welche aus einem Anlagerungsprodukt von einem Alkylenoxid an einem mindestens dreiwertigen aliphatischen Alkohol mit 3 bis 10 Kohlenstoffatomen und Acrylamid oder Methacrylamid erhältlich sind, enthält, dadurch gekennzeichnet, dass die Zubereitung zusätzlich Pfropfpolymerisate enthält, welche als Pfropfgrundlage ein Copolymerisationsprodukt aus (A) einem Acryl- oder Methacrylsäurealkylester, wobei der Alkylrest mindestens 8 Kohlenstoffatome aufweist mit (B) einem Dicarbonsäurediester aus einer ethylenisch ungesättigten aliphatischen Dicarbonsäure und einem Polyethylenglykol, wobei eine endständige Hydroxylgruppe des Diols mit einem $C_1$-$C_4$-Alkylrest verethert ist, aufweisen und als Pfropfbestandteil Seitenketten, die von aufgepfropften hydrophile Gruppen aufweisenden polymerisierbaren Monomeren entstammen, enthalten.

2. Verfahren gemäss Anspruch 1, dadurch gekennzeichnet, dass das als Pfropfgrundlage eingesetzte Copolymerisationsprodukt aus 1 Mol des Dicarbonsäureesters (B) und 2 Mol Acrylsäurealkylester oder Methacrylsäurealkylester (A) aufgebaut ist.

3. Verfahren gemäss einem der Ansprüche 1 und 2, dadurch gekennzeichnet, dass der Dicarbonsäurediester (B) aus Maleinsäureanhydrid entstammt.

4. Verfahren gemäss einem der Ansprüche 1 bis 3, dadurch gekennzeichnet, dass der Dicarbonsäurediester (B) mit einem monoveretherten Diol der Formel

$$HO{-}(CH_2CH_2O)_m{-}R$$

worin R $C_1$-$C_4$-Alkyl, insbesondere Methyl und m 5 bis 100 bedeuten, erhalten wird.

5. Verfahren gemäss einem der Ansprüche 1 bis 4, dadurch gekennzeichnet, dass der als Komponente (A) eingesetzte Acryl- oder Methacrylsäurealkylester sich von einem aliphatischen Monoalkohol mit 8 bis 22 Kohlenstoffatomen ableitet.

6. Verfahren gemäss einem der Ansprüche 1 bis 5, dadurch gekennzeichnet, dass das Copolymerisationsprodukt Seitenketten enthält, die von aufgepfropfter Acrylsäure entstammen.

7. Verfahren gemäss einem der Ansprüche 1 bis 6, dadurch gekennzeichnet, dass die Zubereitung ein Pfropfpolymerisat, welches durch Pfropfpolymerisation von Acrylamid oder Methacrylamid auf ein Anlagerungsprodukt von 40 bis 80 Mol Propylenoxid an ein 3 bis 6 Kohlenstoffatome aufweisendes drei- bis sechswertiges Alkanol erhältlich ist, enthält.

8. Verfahren gemäss Anspruch 7, dadurch gekennzeichnet, dass das Pfropfpolymerisat 4 bis 20 Gew.-% des Anlagerungsproduktes von 40 bis 80 Mol Propylenoxid an 1 Mol Glycerin und 80 bis 96 Gew.-% aufgepfropftes Acrylamid, bezogen auf das Pfropfpolymerisat, enthält.

9. Verfahren gemäss einem der Ansprüche 1 bis 8, dadurch gekennzeichnet, dass die Zubereitung als Schaumbildnet eine Mischung aus Alkylsulfonaten mit 8 bis 10 Kohlenstoffatomen und Fettalkoholen mit 12 bis 22 Kohlenstoffatomen oder Anlagerungsprodukten von 1 bis 4 Mol Ethylenoxid an 1 Mol dieser Fettalkohole enthält.

10. Verfahren gemäss einem der Ansprüche 1 bis 8, dadurch gekennzeichnet, dass die Zubereitung als Schaumbildner eine Mischung aus Anlagerungsprodukten von 2 bis 12 Mol Ethylenoxid an 1 Mol Alkylphenol mit 4 bis 12 Kohlenstoffatomen im Alkylteil, Natriumsalzen von Schwefelsäureestern von Fettalkohol-Ethylenoxidaddukten mit 10 bis 12 Kohlenstoffatomen im Alkoholteil und 2 bis 4 Ethylenoxideinheiten und den Fettsäurediethanolamiden mit 8 bis 18 Kohlenstoffatomen im Fettsäurerest enthält.

11. Verfahren gemäss einem der Ansprüche 1 bis 8, dadurch gekennzeichnet, dass die Zubereitung als Schaumbildner eine Mischung aus Anlagerungsprodukten von 1 bis 15 Mol Ethylenoxid an 1 Mol Fettalkohol mit 12 bis 22 Kohlenstoffatomen und Fettsäurediethanolamiden mit 8 bis 18 Kohlenstoffatomen im Fettsäurerest, enthält.

12. Verfahren gemäss einem der Ansprüche 1 bis 11, dadurch gekennzeichnet, dass das Bedrucken mittels einer Siebdruckmaschine durchgeführt wird.

13. Verfahren gemäss Anspruch 12, dadurch gekennzeichnet, dass die Zubereitung auf ein Sieb oder siebartigen Zwischenträger aufgetragen wird und durch das Sieb oder den siebartigen Zwischenträger hindurch gepresst wird.

14. Verfahren gemäss einem der Ansprüche 1 bis 13, dadurch gekennzeichnet, dass die Fixierung der Farbstoffe durch Dämpfen erfolgt.

15. Verfahren gemäss einem der Ansprüche 1 bis 13, dadurch gekennzeichnet, dass die Fixierung der Farbstoffe nach dem Thermosol-Verfahren erfolgt.

16. Wässerige Zubereitung zum Bedrucken oder Färben von cellulosehaltigem Textilgut, welche Reaktivfarbstoffe, Schaumbildner, Fixieralkalien, Homopolymerisate oder Mischpolymerisate des Acrylamids oder Methacrylamids oder Pfropfpolymerisate, welche aus einem Anlagerungsprodukt von einem Alkylenoxid an einen mindestens dreiwertigen aliphatischen Alkohol mit 3 bis 10 Kohlenstoffatomen und Acrylamid oder Methacrylamid erhältlich sind, enthält, dadurch gekennzeichnet, dass die Zubereitung zusätzlich Pfropfpolymerisate enthält, welche als Pfropfgrundlage ein Copolymerisationsprodukt aus (A) einem Acryl- oder Methacrylsäurealkylester, wobei der Alkylrest mindestens 8 Kohlenstoffatome aufweist mit (B) einem Dicarbonsäurediester aus einer ethylenisch ungesättigten aliphatischen Dicarbonsäure und einem Polyethylenglykol, wobei eine endständige Hydroxylgruppe des Diols mit einem $C_1$-$C_4$-Alkylrest verethert ist, aufweisen und als Pfropfbestandteil Seitenketten, die von aufgepfropften hydrophile Gruppen aufweisenden polymerisierbaren Monomeren entstammen, enthalten.

17. Wässerige Zubereitung gemäss Anspruch 16 verschäumter Form.

## Claims

1. A process for printing or dyeing cellulose-containing textile material with reactive dyes by printing or dyeing the textile material with a foamed, aqueous preparation and fixing the dyes through the action of heat, the preparation containing reactive dyes, foaming agents, fixing alkalis, homopolymers or copolymers of acrylamide or methacrylamide or graft polymers which are obtainable from an addition product of an alkylene oxide onto an at least trihydric aliphatic alcohol having 3 to 10 carbon atoms and acrylamide or methacrylamide, wherein the preparation additionally contains graft polymers which possess as grafting base a copolymerization product from (A) an alkyl acrylate or methacrylate, the alkyl radical having at least 8 carbon atoms, with (B) a dicarboxylic acid diester of an ethylenically unsaturated aliphatic dicarboxylic acid and a polyethylene glycol, a terminal hydroxyl group of the diol having been etherified with a $C_1$-$C_4$ alkyl radical, and contain as graft constituent side chains which stem from grafted-on polymerizable monomers which contain hydrophilic groups.

2. A process according to claim 1, wherein the copolymerization product used as grafting base is based on 1 mole of dicarboxylic acid ester (B) and 2 moles of alkyl acrylate or alkyl methacrylate (A).

3. A process according to either of claims 1 and 2, wherein dicarboxylic acid diester (B) stems from maleic anhydride.

4. A process according to any one of claims 1 to 3, wherein dicarboxylic acid diester (B) is obtained with a monoetherified diol of the formula

$$HO—(CH_2CH_2O)_m—R$$

in which R is $C_1$-$C_4$ alkyl, in particular methyl and m is 5 to 100.

5. A process according to any one of claims 1 to 4, wherein the alkyl acrylate or methacrylate used as component (A) is derived from an aliphatic monoalcohol having 8 to 22 carbon atoms.

6. A process according to any one of claims 1 to 5, wherein the copolymerization product contains side chains which stem from grafted-on acrylic acid.

7. A process according to any one of claims 1 to 6, wherein the preparation contains a graft polymer which is obtainable by graft polymerization of acrylamide or methacrylamide on an addition product of 40 to 80 moles of propylene oxide on a trihydric to hexahydric alkanol having 3 to 6 carbon atoms.

8. A process according to claim 7, wherein the graft polymer contains 4 to 20 % by weight of the addition product of 40 to 80 moles of propylene oxide on 1 mole of glycerol and 80 to 96 % by weight of grafted-on acrylamide, based on the graft polymer.

9. A process according to any one of claims 1 to 8, wherein the preparation contains as foam-forming agent a mixture of alkylsulfonates having 8 to 10 carbon atoms and fatty alcohols having 12 to 22 carbon atoms or addition products of 1 to 4 moles of ethylene oxide on 1 mole of these fatty alcohols.

10. A process according to any one of claims 1 to 8, wherein the preparation contains as foam-forming agent a mixture of addition products of 2 to 12 moles of ethylene oxide on 1 mole of alkylphenol having 4 to 12 carbon atoms in the alkyl moiety, sodium salts of sulfuric acid esters of fatty alcohol/ethylene oxide adducts having 10 to 12 carbon atoms in the alcohol moiety and 2 to 4 ethylene oxide units and fatty acid diethanolamides having 8 to 18 carbon atoms in the fatty acid radical.

11. A process according to any one of claims 1 to 8, wherein the preparation contains as foam-forming agent a mixture of addition products of 1 to 15 moles of ethylene oxide on 1 mole of fatty alcohol having 12 to 22 carbon atoms and fatty acid diethanolamides having 8 to 18 carbon atoms in the fatty acid radical.

12. A process according to any one of claims 1 to 11, wherein printing is effected by means of a screen printing machine.

13. A process according to claim 12, wherein the preparation is applied to a sieve or sievelike support and is forced through the sieve or the sievelike support.

14. A process according to any one of claims 1 to 13, wherein fixing of the dye is effected by steaming.

15. A process according to any one of claims 1 to 13, wherein fixing of the dye is effected by thermosoling.

16. An aqueous preparation for printing or dyeing cellulose-containing textile material, containing reactive dyes, foaming agents, fixing alkalis, homopolymers or copolymers of acrylamide or methacrylamide or graft polymers which are obtainable from an addition product of an alkylene oxide on an at least trihydric aliphatic alcohol having 3 to 10 carbon atoms and acrylamide or methacrylamide, wherein the preparation additionally contains graft polymers which possess as grafting base a copolymerization product from (A) an alkyl acrylate or methacrylate, the alkyl radical having at least 8 carbon atoms, with (B) a dicarboxylic acid diester of an ethylenically unsaturated aliphatic dicarboxylic acid and a polyethylene glycol, a terminal hydroxyl group of the diol having been etherified with a $C_1$-$C_4$ alkyl radical, and containing as graft constituent side chains which stem from grafted-on polymerizable monomers which contain hydrophilic groups.

17. An aqueous preparation according to claim 16, in foamed form.

**Revendications**

1. Procédé pour l'impression ou la teinture de matières textiles cellulosiques avec des colorants réactifs, par impression ou teinture de la matière textile avec une préparation aqueuse que l'on a fait mousser et fixage du colorant par action de la chaleur, la préparation contenant des colorants réactifs, des agents moussants, des alcalis de fixage, des homopolymères ou des copolymères de l'acrylamide ou du méthacrylamide ou des polymères greffés que l'on peut obtenir à partir d'acrylamide ou de méthacrylamide et d'un produit d'addition d'un oxyde d'alkylène sur un alcool aliphatique au moins trifonctionnel et comportant de 3 à 10 atomes de carbone, le procédé étant caractérisé en ce que la préparation contient en outre des polymères greffés qui comportent, en tant que base de greffage, un produit de copolymérisation obtenu à partir de (A) un ester alkylique de l'acide acrylique ou méthacrylique, le groupe alkyle comportant au moins 8 atomes de carbone, et de (B) un diester d'acide dicarboxylique, constitué par un acide dicarboxylique aliphatique à insaturation éthylénique et un polyéthylèneglycol, un groupe hydroxy terminal du diol étant éthérifié par un groupe alkyle en $C_{1-4}$, et en

tant que greffons, des chaînes latérales qui proviennent du greffage de monomères polymérisables comportant des groupes hydrophiles.

2. Procédé conforme à la revendication 1, caractérisé en ce que le produit de copolymérisation utilisé comme base de greffage est constitué d'1 mole du dicarboxylate (B) et de 2 moles d'acrylate ou de méthacrylate d'alkyle (A).

3. Procédé conforme à l'une des revendications 1 et 2, caractérisé en ce que le dicarboxylate (B) dérive de l'anhydride maléique.

4. Procédé conforme à l'une des revendications 1 à 3, caractérisé en ce que le dicarboxylate (B) est obtenu avec un diol monoéthérifié de formule

$$HO—(CH_2CH_2O)_m—R$$

dans laquelle R représente un groupe alkyle en $C_{1-4}$, en particulier le groupe méthyle, et m vaut de 5 à 100.

5. Procédé conforme à l'une des revendications 1 à 4, caractérisé en ce que l'acrylate ou le méthacrylate d'alkyle utilisé comme composant (A) dérive d'un monoalcool aliphatique comportant de 8 à 22 atomes de carbone.

6. Procédé conforme à l'une des revendications 1 à 5, caractérisé en ce que le produit de copolymérisation contient des chaînes latérales qui proviennent du greffage d'acide acrylique.

7. Procédé conforme à l'une des revendications 1 à 6, caractérisé en ce que la préparation contient un polymère greffé qui est obtenu par polymérisation-greffage d'acrylamide ou de méthacrylamide sur un produit d'addition de 40 à 80 moles d'oxyde de propylène sur un alcanol trifonctionnel à hexafonctionnel, comportant de 3 à 6 atomes de carbone.

8. Procédé conforme à la revendication 7, caractérisé en ce que le polymère greffé contient de 4 à 20 % en poids du produit d'addition de 40 à 80 moles d'oxyde de propylène sur 1 mole de glycérine et de 80 à 96 % en poids d'acrylamide greffé, par rapport au polymère greffé.

9. Procédé conforme à l'une des revendications 1 à 8, caractérisé en ce que la préparation contient, comme agent moussant, un mélange constitué d'alkylsulfonates comportant de 8 à 10 atomes de carbone et d'alcools gras comportant de 12 à 22 atomes de carbone ou de produits d'addition d'1 à 4 moles d'oxyde d'éthylène sur 1 mole de ces alcools gras.

10. Procédé conforme à l'une des revendications 1 à 8, caractérisé en ce que la préparation contient, en tant qu'agent moussant, un mélange constitué de produits d'addition de 2 à 12 moles d'oxyde d'éthylène sur 1 mole d'alkylphénol comportant de 4 à 12 atomes de carbone dans la partie alkyle, de sels de sodium d'ester-sulfates de produits d'addition d'oxyde d'éthylène sur des alcools gras comportant de 10 à 12 atomes de carbone dans la partie alcool et de 2 à 4 motifs oxyde d'éthylène, et de diéthanolamides d'acides gras comportant de 8 à 18 atomes de carbone dans le radical d'acide gras.

11. Procédé conforme à l'une des revendications 1 à 8, caractérisé en ce que la préparation contient, en tant qu'agent moussant, un mélange constitué de produits d'addition de 1 à 15 moles d'oxyde d'éthylène sur 1 mole d'alcool gras comportant de 12 à 22 atomes de carbone, et de diéthanolamides d'acides gras comportant de 8 à 18 atomes de carbone dans le radical d'acide gras.

12. Procédé conforme à l'une des revendications 1 à 11, caractérisé en ce que l'impression est réalisée au moyen d'une machine d'impression au cadre.

13. Procédé conforme à la revendication 12, caractérisé en ce que la préparation est déposée sur un tamis ou un support intermédiaire du type tamis, et comprimée au travers du tamis ou du support intermédiaire de type tamis.

14. Procédé conforme à l'une des revendications 1 à 13, caractérisé en ce que le fixage du colorant est effectué par vaporisage.

15. Procédé conforme à l'une des revendications 1 à 13, caractérisé en ce que le fixage du colorant est réalisé selon le procédé Thermosol (thermofixage).

16. Préparation aqueuse pour l'impression ou la teinture de matières textiles cellulosiques, qui contient des colorants réactifs, des agents moussants, des alcalis de fixage, des homopolymères ou des copolymères de l'acrylamide ou du méthacrylamide ou des polymères greffés que l'on peut obtenir à partir d'un produit d'addition d'un oxyde d'alkylène sur un alcool aliphatique au moins trifonctionnel, comportant de 3 à 10 atomes de carbone, et d'acrylamide ou de méthacrylamide, caractérisée en ce que la préparation contient en outre des polymères greffés qui comportent, comme base de greffage, un produit de copolymérisation obtenu à partir de (A) un acrylate ou méthacrylate d'alkyle, le reste alkyle comportant au moins 8 atomes de carbone, et de (B) un diester d'acide dicarboxylique, provenant d'un acide dicarboxylique aliphatique à insaturation éthylénique et d'un polyéthylèneglycol, un des groupes hydroxyle terminaux du diol étant éthérifié avec un groupe alkyle en $C_{1-4}$, et comme greffons, des chaînes latérales dérivant de monomères polymérisables, présentant des groupes hydrophiles et greffés.

17. Préparation aqueuse conforme à la revendication 16, sous forme de mousse.